# EUROPÄISCHE PATENTSCHRIFT

(11) **EP 1 002 460 B1**
(45) Veröffentlichungstag und Bekanntmachung des Hinweises auf die Patenterteilung: **16.04.2003**
(21) Anmeldenummer: 99121127.7
(22) Anmeldetag: 22.10.1999
(51) Int. Cl.: A01G 3/00

(54) **Vorrichtung zum Stutzen von Jungpflanzen in Kultivierplatten und Topfpflanzen**
Device for pruning young plants in cultivation panels and potted plants
Appareil pour élaguer des jeunes plantes dans des plaques de culture et des plantes en pots

(30) Priorität: 20.11.1998 DE 19853527
(43) Veröffentlichungstag der Anmeldung: 24.05.2000
(73) Patentinhaber: Lanz, Franz, 89160 Dornstadt (DE)
(72) Erfinder: Lanz, Franz, 89160 Dornstadt (DE)

(56) Entgegenhaltungen:
- DE-A- 4 110 582
- DE-A- 4 240 319
- US-A- 3 964 245
- US-A- 4 757 670

## Beschreibung

Stand der Technik: Es sind Stutzmaschinen bekannt, die eine Einrichtung mechanischer Art, zum Anheben der Pflanzentriebe einer Topfpflanze vor dem horizontalen Schneiden der Triebe an der Oberseite der Topfpflanze aufweisen. In einer aus der DE 4110582 A1 bekannten Ausführung werden die Pflanztriebe mit Fingern oder Zangen über dem Topfrand gefaßt und mit mechanischen Bewegungen nach oben geformt. Danach werden mit dem dahinter liegenden Spezialmessen die geformten Pflanzentriebe abgeschnitten. Weiter gibt es Stutzmaschinen, in denen die Pflanzentriebe mit gegenläufigen Bürsten nach oben geformt, vor die Messer geführt und danach abgeschnitten werden. Diese Einrichtungen beinhalten, daß die abgeschnittenen Triebe seitlich und unkontrolliert auf den Boden oder in ein Behältnis fallen. Der Arbeitsplatz wird mit aufgestautem Stutzmaterial angehäuft.
Diese Einrichtungen bedürfen der Notwendigkeit, daß der Bediener ein verhältnismäßig großes technisches Verständnis für die Maschineneinstellung aufweist, in Bezug auf das Zusammenführen der Triebe, weil es verschiedene Pflanzgrößen, Pflanzenarten, Pflanzenformen, Triebstärken und Pflanzenblattmassen gibt. Die Einrichtungen sind sehr aufwendig zum Einrichten und Einstellen auf die entsprechenden Pflanzenarten in der Maschine, und die vorwiegend mechanischen Maschinen sind sehr teuer.

Das Stutzen der Jungpflanzen in Kultivierplatten wird zum Teil mit herkömmlichen Rasenmähern und mit Heckenscheren durchgeführt. Dabei werden vor allem nach unten wachsende Triebe nicht erfaßt und nicht geschnitten, weil die Sogkraft des Rasenmähers beim Stutzen nicht ausreicht, um die flachwachsenden Triebe senkrecht nach oben zu richten und abgeschnitten werden können. Die Gärtner müssen flachwachsende Jungpflanzen und Topfpflanzen mit unterhalb des Topfrandes befindlichen Trieben heute noch von Hand stutzen; weil man die Triebe nicht maschinell nach oben bringt; mit viel Zeitaufwand und in gebückter Haltung wird das Stutzen von Hand durchgeführt (Kreuzschmerzen u.u.).

Diese Nachteile, schwierige Einstellung an der Maschine, großes notwendiges technisches Verständnis müssen die Bediener und Einrichter bewältigen und aufbringen. Weiter ist ein großer Nachteil, daß keine Topfpflanzen und Jungpflanzen in Kultivierplatten, in einer einzigen Vorrichtung, gestutzt werden können.
Es sind somit mehrere verhältnismäßig teure Maschinen notwendig.
Weiter ist ein gravierender Nachteil, daß bei den vorhandenen Maschinen keine unbeschädigten Stecklinge beim maschinellen Schneiden der Pflanzen automatisch in einen Auffangsack gelangen.

Erfindungsgemäß wird diese Aufgabe gemäß dem Patentanspruch 1 dadurch gelöst, daß die Vielzahl von Topfpflanzen, Pflanzengrößen, Pflanzenarten, Pflanzenformen, verschiedener Triebstärken, sowie Jungpflanzen in Kultivierplatten, mit Hilfe von seitlich, mittig, senkrecht nach oben führenden Luftströmen und einem über der Pflanze befindlicher Saugdüse geformt werden und mittels eines Schneidgerätes, ohne schwierige Einstellungen und ohne großes technisches Verständnis, in einer Maschine gestutzt werden können.
Erfindungsgemäß werden gleichzeitig die abgeschnittenen Triebe unbeschädigt in einen Auffangsack befördert, zum weiteren Verarbeiten der Stecklingsverwertung, als Stecklingsware für die Jungpflanzen.

Die Vorteile der Erfindung beinhaltet, daß eine sehr vielfältige, komplette, billige, einfach zu bedienende Vorrichtung mit Hilfe der Luftgeschwindigkeit die Pflanzentriebe senkrecht nach oben geführt werden, ohne aufwendige, mechanische Bewegungen.

Ein Ausführungsbeispiel der Erfindung ist in den Zeichnungen dargestellt und wird im folgenden beschrieben:
- Fig. 1: Seitenansicht für Topfpflanzen
- Fig. 2: Vorderansicht für Topfpflanzen
- Fig. 3: Vorderansicht für Jungpflanzen in Kultivierplatten
- Fig. 4: Draufsicht für Jungpflanzen in Kultivierplatten
- Fig. 5: Ansicht des Auffangbehälters für unbeschädigte Stecklingsware

Es folgt die Erläuterung der Erfindung, anhand der Zeichnungen nach dem Aufbau der dargestellten Erfindung:

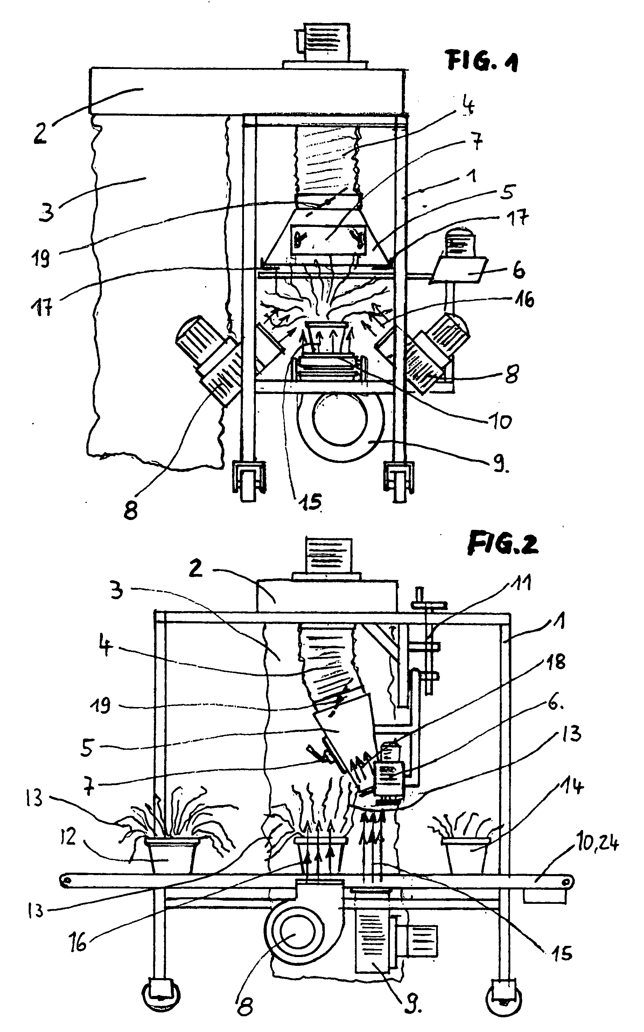

In Figur 1 und 2 wird gezeigt; das Stutzen von Topfpflanzen:

Die ungestutzten Topfpflanzen 12, werden auf dem laufenden Förderband 10,24 welches im Gestell 1 aufliegt, in Richtung Aufrichteinheit, mit variabler Förderband-Geschwindigkeit, zu den Luftstromventilatoren 8 und 9 transportiert. Das Förderband 10,24 für den Topftransport kann ein Gummiband (ohne den Einsatz des Luftstromventilators 9) oder ein Drahtgitterförderband 24 mit dem Einsatz des Luftventilators 9 sein. Beim Vorbeilaufen an dem Luftstrom 16 der Ventilatoren 8 oder 9 werden die seitlich des Pflanztopfes hängenden Pflanztriebe 13 in Richtung der Pflanzmitte, nach oben gerichtet. Die schräg angebrachten Luftventilatoren 8 können im Winkel, in der Horizontalen und in der Vertikalen stufenlos eingestellt werden, um einen optimalen Luftstrom zu den Pflanztrieben zu bekommen. Eine Mithilfe für das Aufrichten wird zusätzlich mit der Ansaugvorrichtung 2 (Ventilator) über den Ansaugtrichter 5 und Saugschlauch 4,26, bewirkt. Die Topfpflanzen 12 mit den, durch die Luftströme 15 und 16, aufrecht stehenden Pflanztriebe werden auf dem laufenden Förderband zur Schneideinheit 6 transportiert, kann z.B. eine Heckenschere 6 oder ein Spezialmesser 6 sein, welche sich unmittelbar unter dem Ansaugtrichter 5 befindet, und abgeschnitten. Die abgeschnittenen Triebe werden über den Ansaugtrichter 5, den Saugschlauch 4, 26 und über die Ansaugvorrichtung 2 in den Auffangsack 3 gesaugt bzw. geblasen. Für langes Schnittgut wird das Verstellblech 7 nach oben gerückt, um ein freies Durchlaufen der Triebe zur Schneideinheit 6 zu gewährleisten. Die geschnittene Topfpflanze 14 besitzt nach dem Schneiden die gewünschte Trieblänge und alle abgeschnittenen Triebe befinden sich im Auffangsack 3.
Die Luftstromstärken 15 und 16 werden elektrisch, über die Drehzahl, geregelt, um eine optimale senkrechte Pflanzentrieb-Stellung vor dem Schneiden zu erhalten. Die LuftAnsauggeschwindigkeit 18 bzw. die rechteckige, schlitzförmige Öffnung 23 in dem Ansaugtrichter 5, wird über Schieber 17, welche horizontal rechts und links an dem Ansaugtrichter 5 befestigt sind, eingestellt. Die rechteckige, schlitzartige Öffnungsfläche 23 wird auf die zu schneidende Pflanze somit variabel gestaltet.
Weiter wird die Luftansauggeschwindigkeit 18 in dem Ansaugtrichter 5 durch ein Drosselklappe 19 mechanisch oder durch eine elektrische Drehzahlregelung des Ventilators geregelt. Die Schnitthöhe der Pflanzen wird über die Höhenverstellung 11 durchgeführt. Dies geschieht indem, daß die Schneideinheit 6 fest mit dem Ansaugtrichter 5 verbunden ist und an dem Gestell 1 aufgehängt wird.
Über eine Gewindespindel wird dann die Höhe eingestellt. Dadurch kann ein schnelles Einstellen der Schnitthöhe für die Pflanzen durchgeführt werden.

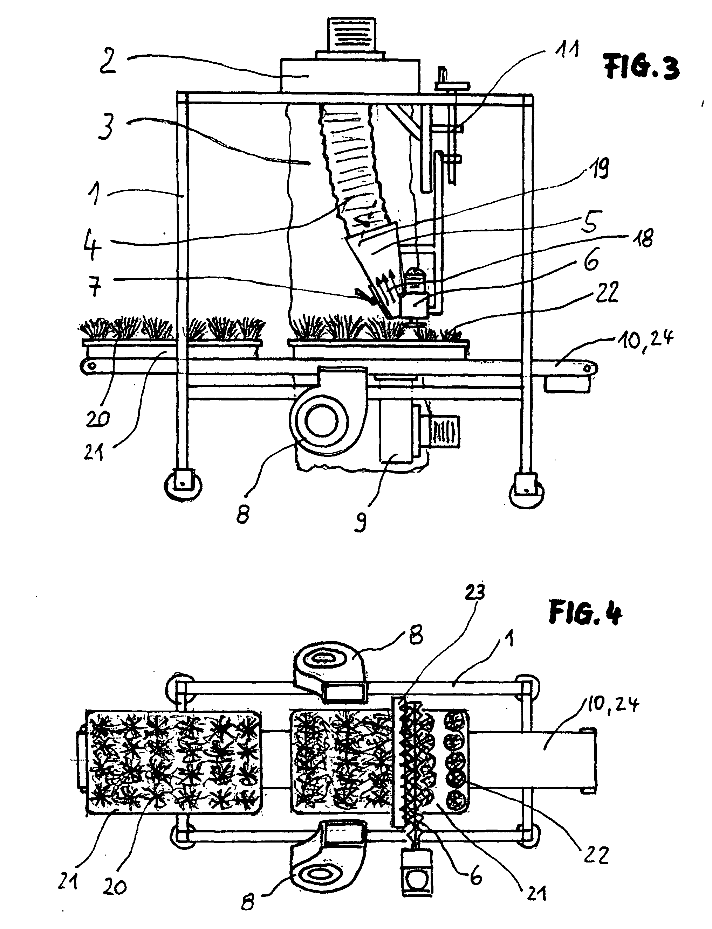

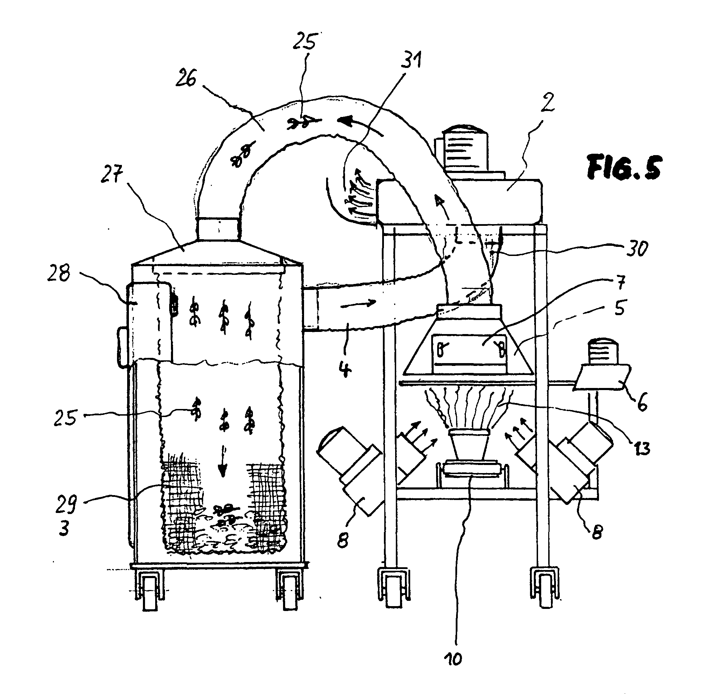

In Figur 3 und 4 wird gezeigt; das Stutzen der Jungpflanzen in Kultivierplatten:

Eine weitere Möglichkeit mit derselben Stutzvorrichtung werden Jungpflanzen 20 in den Kultivierplatten 21 gestutzt, wie die Erfindung in Fig. 3 und Fig. 4 in den Zeichnungen nach Aufbau und nach Wirkungsweise gezeigt und nachstehend erläutert wird:

Die ungestutzten Jungpflanzen 20 in den Kultivierplatten (geschlossene Platten, luftdurchlässige Platten mit Töpfen, Trays) 21 werden auf dem stufenlos, regelbarem Förderband 10 in Richtung Schneideinheit 6 transportiert. Vor und direkt über der Schneideinrichtung 6 befindet sich die Ansaugeinrichtung 5 mit der rechteckigen oder schlitzartigen Öffnung 23. Das Messer der Schneideinrichtung 6 ragt zum Teil in die rechteckige, schlitzartige Öffnung 23, um die senkrecht beim Ansaugvorgang nach oben stehenden Triebe sicher abschneiden zu können. Die Luftgeschwindigkeit wird mit der Drosselklappe oder elektronisch stufenlos geregelt. Die jungen Triebe der einzelnen Jungpflanzen 20 in den Kultivierplatten sind zum Teil sehr stark miteinander zusammengewachsen und werden durch das Ansaugen 18, mit Hilfe der Luft, voneinander getrennt und danach gleich mit der Schneideinrichtung 6 abgeschnitten und in den Auffangsack 3 befördert.
Die Erfindung beruht vor allem auf der Anwendung, die rechteckige oder schlitzartige Öffnung 23 auf die Breite der Kultivierplatte 21 und ein Teil der Pflanzenfläche anzusetzen, um unterhalb der Öffnung 23 eine große Sogkraft zu erhalten, damit alle in der Kultivierplatte 21 ineinander gewachsene Triebe 20 senkrecht mit der Sogkraft nach oben gezogen, geformt, vereinzelt und danach abgeschnitten werden. Jeder Trieb der einzelnen Jungpflanze 22 wird somit gleich lang. Damit bekommt jede Pflanze, je nach Kultur eine gleichmäßige Form und später ein sehr gleiches Wachstum und bessere Qualität.

In Figur 1, 2, 3 und 4 werden die abgeschnittenen Triebe durch den Ventilator 2 transportiert und beschädigt. Dadurch kann keine Stecklingsware verwendet werden.

In Figur 5 wird gezeigt, wie die abgeschnittenen Triebe in einen Auffangsack gelangen. Durch diese Einrichtung werden die Triebe nicht beschädigt und können als unbeschädigte Stecklinge weiter für das Heranziehen von Jungpflanzen verwendet werden. Die Erfindung beruht weiter auf die Wiederverwertung der abgeschnittenen Triebe. Die Stecklingsware 25 wird von der Düse 5 über den Saugschlauch 26 in den luftdurchlässigen Auffangsack 29 im Auffangbehälter 27 unbeschädigt aufgefangen. In dem Auffangbehälter 27 entsteht ein Unterdruck. Die Stecklinge fallen ohne Verwirbelung in den Auffangsack und bleiben liegen. Zwischen dem Auffangsack 29 und dem Behälter ist ein ausreichender Unterdruckzwischenraum, daß sich keine Verwirbelung im Auffangsack aufbauen kann. Um den mit Stecklingen gefüllten Auffangsack 29 herausnehmen zu können befindet sich am Umfang des Behälters 27 eine Öffnungstüre 28. Die Saugkraft und den Unterdruck erzeugt der Ventilator 2, der über den Saugschlauch 30 und Saugschlauch 26 die Triebe in den Auffangsack 29 befördert. Die Ansaugvorrichtung (Ventilator) 2 bläst die Luft 31 nach oben ins Freie.

### Bezugszeichenliste

- 1: Gestell
- 2: Ansaugvorrichtung (Ventilator)
- 3: Auffangsack
- 4: Saugschlauch
- 5: Ansaugtrichter (Düse)
- 6: Schneideinheit
- 7: Verstellblech
- 8: Luftventilator
- 9: Luftventilator
- 10: Förderband
- 11: Höhenverstellung
- 12: ungeschnittene Topfpflanze
- 13: zu hängende, schneidende Pflanztriebe
- 14: geschnittene Topfpflanze
- 15: senkrecht nach oben führender Luftstrom
- 16: schräg zur Mitte führender Luftstrom
- 17: Schieber
- 18: Ansauggeschwindigkeit
- 19: Drosselklappe
- 20: Jungpflanzen unbeschnitten
- 21: Kultivierplatten
- 22: Jungpflanzen beschnitten
- 23: rechteckig, schlitzartige Öffnung
- 24: Gitterförderband
- 25: abgeschnittene Triebe
- 26: Saugschlauch
- 27: Auffangbehälter
- 28: Türe
- 29: luftdurchlässiger Auffangsack
- 30: Saugschlauch
- 31: Luft

## Patentansprüche

1. Vorrichtung zum Stutzen von Pflanzen (12, 20) mit Luftbewegung (16, 15, 18, 31), die eine Einrichtung zum Aufrichten, vor dem Stutzen sowie eine dahinter befindliche Schneideinrichtung (6) zum Abschneiden von einer vorab festgelegten Schnitthöhe überstehender Pflanzenteilen umfaßt, **dadurch gekennzeichnet, daß** die Aufrichteinheit seitliche schräg oder unterhalb der Pflanzen angeordnete Mittel umfaßt, die schräge oder senkrechte nach oben führende Luftströme (15, 16) erzeugen und daß diese Luftströme (15, 16) durch ein oberhalb der Pflanzen angeordneten Ansaugtrichter (5) mit einer rechteckigen oder schlitzartigen Öffnung (23) geleitet werden.

2. Vorrichtung nach Anspruch 1, **dadurch gekennzeichnet, daß** die Luftströme (15, 16) für das Aufrichten der Triebe (13) durch Ventilatorer (8, 9) erzeugt werden.

3. Vorrichtung nach Anspruch 2, **dadurch gekennzeichnet, daß** die Luftventilatoren (8, 9), in der Höhe vertikal und horizontal verstellt werden können.

4. Vorrichtung nach Anspruch 2, **dadurch gekennzeichnet, daß** die Luftventilatoren (2, 8, 9), eine stufenlos einstellbare, elektronisch geregelte Luftmengenregelung aufweisen.

5. Vorrichtung nach Anspruch 1, **dadurch gekennzeichnet, dass** es ein luftdurchlässiges Förderband (10, 24) umfaßt.

6. Vorrichtung nach Anspruch 1, **dadurch gekennzeichnet, daß** der Ansaugtrichter (5) ein verstellbares Verstellblech (7) und Schieber (17) umfaßt.

7. Vorrichtung nach Anspruch einem der vorangehenden Ansprüche, **dadurch gekennzeichnet, daß** die Schneideinrichtung (6) mit dem Ansaugtrichter (5) eine einheitliche, stufenlose Höhenverstellung (11) umfaßt.

8. Vorrichtung nach Anspruch 1, **dadurch gekennzeichnet, daß** die Ansaugeinheit (2) eine zusätzliche Aufrichthilfe der Triebe (13) aufweist.

9. Vorrichtung nach Anspruch der vorangegangenen Ansprüchen, **dadurch gekennzeichnet, daß** zwischen Ansaugtrichter (5) und Ansaugvorrichtung (2) ein Auffangbehälter (27) mit Unterdruck und mit Auffangsack (29) der die Triebe (25) auffängt, dazwischen geschaltet ist.

## Claims

1. Device to prune plants (12, 20) using the movement of air (16, 15, 18, 31) which includes a device to straighten up before pruning as well as a cutting device behind it to cut off a previously specified cut off height of projecting plant parts which is identified by the fact that the straightening up device includes means arranged on the side or below the plant at an angle which generate air streams which are angled or straight upward pointing (15, 16) and that these air streams (15,16) are guided through a suction funnel (5) arranged above the plants with a rectangular or slot type opening (23).

2. Device according to claim 1, identified by the fact that the air streams (15, 16) used to straighten up the shoots (13) are generated by fans (8, 9).

3. Device according to claim 2, identified by the fact that the height of the air fans (8, 9) can be adjusted vertically and horizontally.

4. Device according to claim 4, 2, identified by the fact that the air fans (8, 9) have a steplessly adjustable, electronically controlled air volume regulating system.

5. Device according to claim 1, identified by the fact that it includes a conveyor belt (10, 24) which allows air to pass through it.

6. Device according to claim 1, identified by the fact that the suction funnel (5) includes an adjustable panel (7) and sliding device (17).

7. Device according to a claim of one of the above claims, identified by the fact that the cutting device (?) with the suction funnel (5) includes a uniform, steplessly adjustable height adjustment (11).

8. Device according to claim 1, identified by the fact that the suction unit (2) has an additional straightening up aid for the shoots (13).

9. Device according to a claim of the above claims, identified by the fact that there is a container (27) with a vacuum and with a catching bag (29) which catches the shoots is positioned between the suction funnel (5) and the suction unit (2).

## Revendications

1. Dispositif de support de plantes (12, 20) avec mouvement d'air (16,15,18, 31) qui comprend un dispositif pour redresser se trouvant devant le support ainsi qu'un dispositif de coupe se trouvant derrière pour couper les parties de plantes qui dépassent une hauteur de coupe définie au préalable, **caractérisé en ce que** l'unité de redressement comprend des moyens disposés sur le côté inclinés ou au-dessous des plantes qui produisent des courants d'air (15, 16) dirigés inclinés ou verticaux vers le haut et que ces courants d'air (15, 16) passent par une trémie d'aspiration (5) ayant une ouverture (23) rectangulaire ou sous forme de fente, disposée au-dessus des plantes.

2. Dispositif selon la revendication 1, **caractérisé en ce que** les courants d'air (15, 16) sont produits par des ventilateurs (8, 9) pour le redressement des pousses (13).

3. Dispositif selon la revendication 2, **caractérisé en ce que** les ventilateurs (8, 9) peuvent être réglés en hauteur verticalement et horizontalement.

4. Dispositif selon les revendications 4, 2, **caractérisé en ce que** les ventilateurs (8, 9) présentent une régulation du débit d'air réglée électroniquement, pouvant l'être en continu.

5. Dispositif selon la revendication 1, **caractérisé en ce qu'**il comprend une bande transporteuse (10, 24) laissant passer l'air.

6. Dispositif selon la revendication 1, **caractérisé en ce que** la trémie d'aspiration (5) comprend une tôle d'ajustage (7) réglable et un curseur (17).

7. Dispositif selon l'une des revendications précédentes, **caractérisé en ce que** le dispositif de coupe (6) comprend un réglage en hauteur (11) uniforme continu avec la trémie d'aspiration (5).

8. Dispositif selon la revendication 1, **caractérisé en que** l'unité d'aspiration (2) présente une aide complémentaire de redressement des pousses (13).

9. Dispositif selon l'une des revendications précédentes, **caractérisé en ce qu'**entre la trémie d'aspiration (5) et le dispositif d'aspiration (2) est intercalé un bac collecteur (27) avec dépression et sac collecteur (29) qui retient les pousses.
